# EUROPEAN PATENT APPLICATION

(11) **EP 2 264 309 A2**
(43) Date of publication of application: **22.12.2010**
(21) Application number: 10398002.5
(22) Date of filing: 15.06.2010
(51) Int. Cl.: F03D 1/04

(54) **Wind turbine for an omnidirectional flow**

(30) Priority: 15.06.2009 PT 10462909
(71) Applicant: Campos Ruao da Cunha, Antonio Pedro, 4580-255 Paredes (PT)
(72) Inventor: Campos Ruao da Cunha, Antonio Pedro, 4580-255 Paredes (PT)

(57) **Abstract**

The device is a motionless inert structure(5) with 2 to 6 lateral openings (1) with large area of exposure to fluids that direct the fluid from any direction (omnidirectional) and promotes a Venturi effect which speeds up towards a smaller highly efficient turbine (2) that operates with a higher RPM. The system operates with two combined flow streams (7,8,9,10,11,12) that enhance the energy generated by the turbine. The whole structure is scalable to the area available, needs required and can be installed in buildings to be built from scratch, already constructed buildings (if provided minimum area available at the top) and also on mountains / country fields / sea, etc.

This invention is applicable in the energy industry, being able to sub-markets for microgeneration as well as large power plants.

## Description

### Part I - General description of the invention

### Technical Status

This invention concerns to electrical energy production, specifically refers to a device conceived to improve efficiency levels associated to wind energy production and also other fluids, like ocean currents and waves.

### Background of the Invention

The wind speed is extremely important for the amount of energy a wind turbine can convert to electricity. The energy content of the wind varies with the cube of the average wind speed e.g. if the wind speed is twice as high it contains eight times as much energy.

The design of the device promotes wind acceleration due its geometry. This enables a smaller but higher rotation wind turbine to harvest more energy, and by the fact of a lower wake rotation the system starts to produce energy sooner than any other wind turbine.

### Objectives of the Invention

Given the disadvantages of the current state, there is a need for a device for producing wind energy that:
1. Have low environmental and visual impact;
2. Have a high energy production;
3. Ability to work with low wind speed. typical of urban environments;
4. Low noise generation

### Brief Description of the Invention

This invention is a motionless inert structure dome-shaped with four lateral openings with large area of exposure to wind that direct the wind from any direction (omni directional) and promotes a venturi effect which speeds up towards a smaller high efficiency turbine that operates with a higher RPM. The same amount of power can be extracted by allowing the rotor to rotate faster and produce less torque. Less torque means that there is less wake rotation. Less wake rotation means there is more energy available to extract.

The device operates with two combined flow streams. The intake and exhaust flows. In the intake flow the air enters the side openings of the structure and undergoes a smooth orientation towards the central turbine regardless of the incidence angle of the wind in the structure. The air is then accelerated due to the "Venturi effect" caused by the gently narrowing of the input surfaces towards the turbine. The central turbine is enclosed in a diffuser. "It is possible to exceed the Betz Limit by placing the wind turbine in a diffuser. If the cross-section of the diffuser is shaped like an aerofoil, a lift force will be generated by the flow through the diffuser. The effect of this lift is to create a ring vortex, which by the Biot-Savart law will induce a velocity to increase the mass flow through the rotor" The external or exhaustion flow is caused by wind acting on the remaining outer structure and is deflected to the top of the structure. At the top of the structure before the central turbine is a aerodynamic deflection that generates a low pressure in the turbine area and assists the exhaust from the intake flow. This low pressure is generated by the junction of two streams which enhances the energy generated by the turbine because of this area of extremely low pressure.

The exhaust flow contributes for lowering the pressure above the turbine and the Intake flow increases the pressure below the turbine. We are increasing the captured area which is more than the area of in rotor in our case.

Therefore maximum power available in the upstream wind from the rotor is more than the conventional turbine. Due to the non-uniform pressure distribution in the device intake and curvilinear flow across the turbine blades a higher Cp than 0.593 is expected. Actual state of the art Cp is limit to 0.593.

### Advantages of the Invention

The design of the device of the invention promotes the acceleration of the wind due to its geometry. This allows a smaller sized wind turbine but with a higher rotation speed, to produce more energy and, by owning a lower rotation awakening, the system begins to produce power sooner than any other wind turbine.

Moreover, because the diameter of the central turbine to be smaller than standard ones, and therefore presenting a lower cost of production, will also consider the possibility of using high performance materials such as composites of carbon fiber / epoxy or magnesium alloys thus reducing the risk of destruction, even at high rotational speeds.

When the invention is accomplished with a turbine in the central horizontal and immobile, ie not having to align with the wind direction, the device of the invention allows the use of secondary flows from the exhaust air-forced ventilation, aspiration, resulting heat of air-conditioning, etc..Thus, this mode allows operation in cogeneration, recovering some of that energy used to activate these devices.

The entire structure is scalable to the available area and required needs. It can be installed in buildings to be built, and existing buildings (if provided minimum area available at the top), as well as on hills / fields / sea, etc..

This invention is applicable in the energy industry, being able to sub microgeneration installations as well as a great power.

This invention is also capable of being installable at sea to be placed with floating devices and explore off-shore winds, and be placed underwater and explore ocean currents and waves.

### PART II - Detailed Description of Invention

### Brief description of Figures

The present invention is described below, without limitation and by way of example, by way of a preferred embodiment, represented in the attached drawings in which:

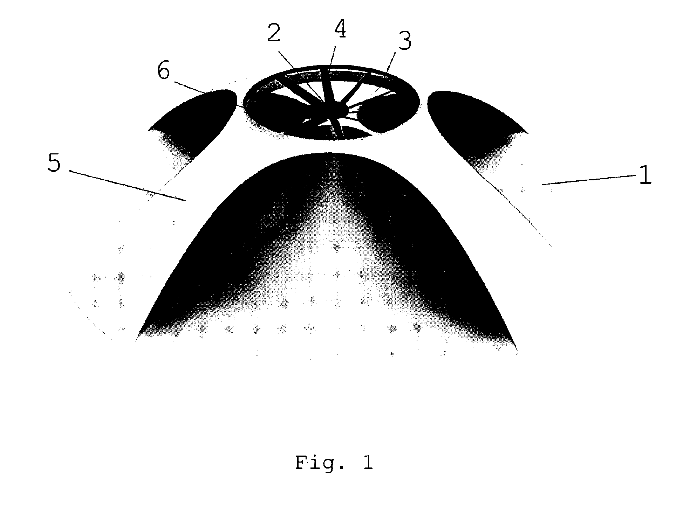

- The figure 1 is a schematic representation in isometric view of the device of the invention;
- The Fig.2 is a schematic representation in side cutting of the device;
- The Fig.3 is a schematic representation in top view of the device with an airflow with incidence of 45 degrees on two air intakes;
- The Fig.4 is a schematic representation in top view of the with the airflow with incidence of 0 degrees in one air intake and 90 degrees on two other air intakes;

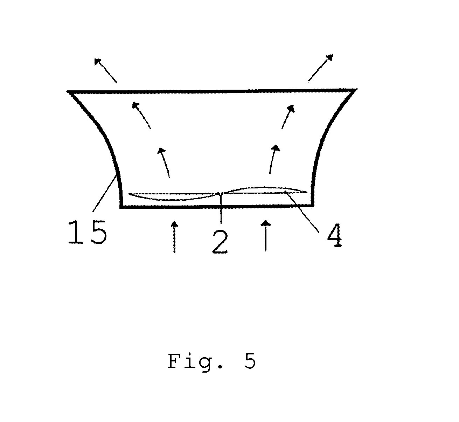

- The Fig.5 is a schematic representation in side view of an aerodynamic diffuser surrounding the turbine.

### Example of Implementation of the Invention

Referring to the figures, will now be described a preferred embodiment of the invention as described below.

The device of the invention consists of an immobile and inert dome shaped structure (5), with four sided openings (1) with a large area of exposure to wind. Alternative modes of delivery are also provided in which the outer shape of the device can acquire different geometric shapes to better integrate the environment as well as to improve its performance for a specific situation. Thus geometric shapes such as cylinders, cubes, pyramids, etc.., are likely to be used as external shape of the device. The number of air intakes may also vary depending on the application or energy efficiency expected. So the device may have alternatively 2 to 6 air intakes.

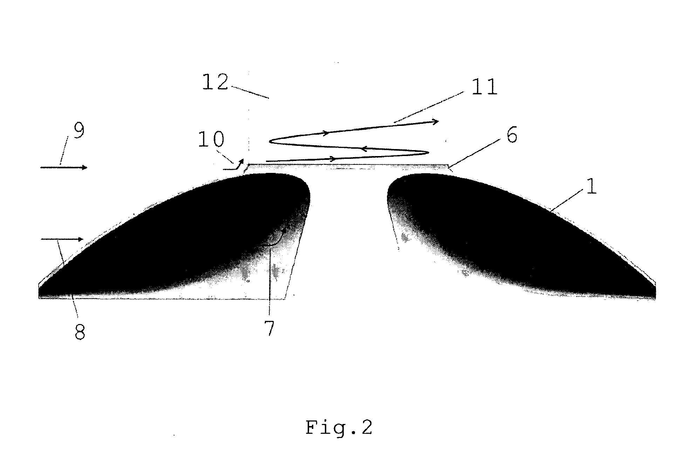

This device of the invention operates with two streams of combined flow (Fig. 2), namely an intake stream or admission (7.8) and exhaust flow (9,10,12).

In the flow of admission (7.8), air enters through at least one of the lateral openings (1) of the structure (5) and is directed upward to the blades (4) a central turbine (2), regardless of the angle of incidence of the wind structure (5). The air is accelerated by the Venturi effect caused by the smooth narrowing of the surfaces of the side openings (1) of the structure (5) as they approach the central turbine (2). This stream of admission (7.8) is also directed to an area of the blades (4) with higher angular momentum, that contribute most to the torque, maximizing the power generated by the directional flow.

The turbine (2) center is located between a diffuser (15) streamlined to reduce the air pressure behind the blades (4).

The exhaust flow (9,10,12) is caused by the wind that hits on the remaining outer surfaces of the structure (5) and is deflected to the top of the structure (5). At the top of the structure (5) before the central turbine (2),an aerodynamic deflector is provided (6) that generates a low pressure zone (12) over the central turbine (2), which helps the exhaust flow entry (7,8). The low pressure zone (12) is amplified by the junction of two streams (intake and exhaust) (11) which thus reinforce the energy generated by the turbine due to this central area (11,12) of extremely low pressure.

The exhaust flow (9,10,12) helps to decrease the pressure up (11,12) of the central turbine (2.4) and decreased intake (7,8) increases the pressure below the turbine (7).

Due to the contribution of these two flows (inlet and exhaust), this device design can provides maximum efficiency larger than 59% in the conversion of wind energy into useful mechanical energy.

In a particularly preferred mode of realization, the device of the invention can make use of aerodynamics to improve performance and minimize the losses resulting from directing the flow of air to the central turbine (2).

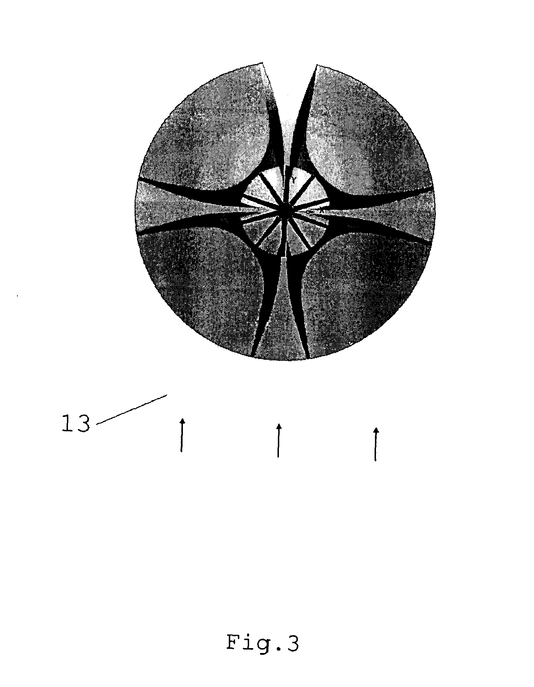

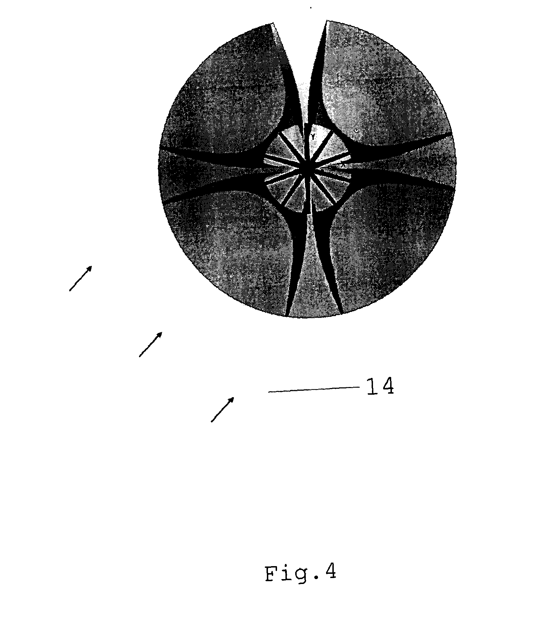

For the analysis of figures 3 and 4, one can observe that whatever the wind direction there is always a large exposure area. The end result of the director vector of the wind is always up (or down depending on the type of application) of the central turbine (2), even with turbulent winds and fast oscillation direction. This represents a great advantage in urban environments where normal wind turbines do not work satisfactorily.

In another particularly preferred mode of realization, the central turbine (2) used in the device of the invention has variable pitch blades (4). With this variation, the system automatically optimizes power output to a specific wind speed and will start producing power for lower values of wind speed. The blades (4) of variable angle also promote greater use limit without entering stall loss. Thus the device of the invention will continue to produce energy with strong winds.

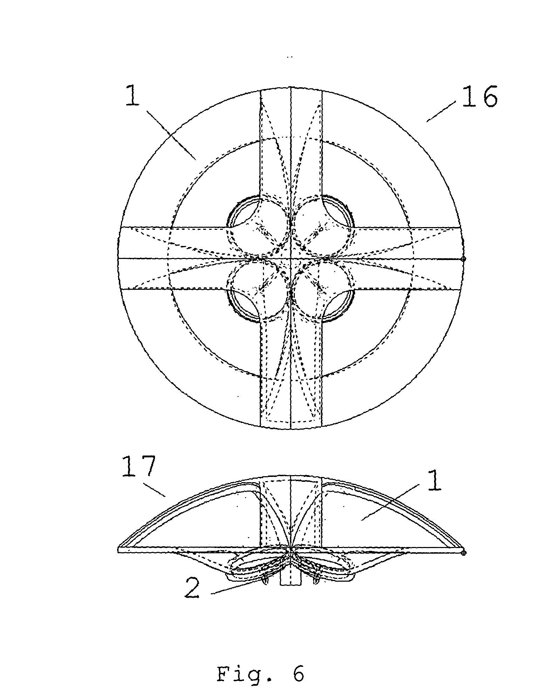

As is all too evident, the central turbine (2) used in the device of the invention can take different forms in order to achieve better results for a specific use. Similarly, one can conceive the same invention in which the air intake may alternatively direct the airflow downward (16,17). It is also possible to envisage a solution where more turbines are applied to the device, such as a turbine (2) for air intake (1) as you can see in fig.6. The turbine (2) to be placed at the entrance of air (1) may be applied vertically or inclined (16,17).

## Claims

1. Energy production device from an omnidirectional/Biaxial flow, **characterized by** a turbine (2) comprising an electric generator and turbine blades (4) variable-angle or otherwise-shaped aerofoil; the refered turbine that is integrated in a structure (5) dome-shaped or other suitable geometric shape to acomodate two or more air intakes (1) of concave shape ; an aerodynamic part (6) attached or molded into top of the structure (5) ; an aerodynamic diffuser (15) which involves the turbine (2).

2. Device according to previous claims, **characterized by** the structure (5) containing two or more openings (1) concave that direct the air flow toward the turbine (2) whether it is in a superior position as lower (16,17), channeling the flow of air upward and / or downward, respectively.

3. Device according to the previous claims, **characterized by** the turbine (2) be of vertical axis or horizontal axis kind and can work with fluids.

4. Device according to claim 1 **characterized by** the turbine (2) being disposed horizontally and at the top and center of the struccture(5) that have exhaust outlets directed to the turbine (2) from domestic and industrial exhaust systems or thermal differential.

5. Device according to previous claims **characterized by** the structure (5) being configured to direct the outer wind that hits the surface of the structure (5) to the top (10).

6. Device according to previous claims **characterized by** the structure (5) containing a low pressure generator aerodynamic device (6) on top of the structure (5) that causes a deflection in the wind and creates a low pressure zone in the area (11,12) after the flow passes the turbine (2).

7. Device according to previous claims **characterized by** the fact that the turbine (2) having or not an electronic device that automatically controls the tilt of the blades (4) Turbine (2) as the wind speed is experienced locally.

8. Device according to previous claims, **characterized by** the openings (1) are configured in a geometric concave shape (1) for the turbine (2) even if the incident angle exceeds 45 degrees (13,14).

9. Device according to previous claims, **characterized by** the flow of air entering through openings (1) being directed to the outter area of the blades (4) of the Turbine (2) with higher angular momentum.

10. Device according to previous claims, **characterized by** the structure (5) having or not solar panels combined for hybrid power generation.

11. Device according to previous claims **characterized by** the fact that the structure (5) used can take different geometric forms that integrate the air intakes (1).
